(19) Europäisches Patentamt / European Patent Office / Office européen des brevets

(11) **EP 4 457 546 B1**

(12) **FASCICULE DE BREVET EUROPEEN**

(45) Date de publication et mention
de la délivrance du brevet:
**29.04.2026 Bulletin 2026/18**

(21) Numéro de dépôt: **22844239.8**

(22) Date de dépôt: **29.12.2022**

(51) Classification Internationale des Brevets (IPC):
**G01T 1/36** *(2006.01)*     **G01T 7/00** *(2006.01)*

(52) Classification Coopérative des Brevets (CPC):
**G01T 7/005; G01T 1/36**

(86) Numéro de dépôt international:
**PCT/EP2022/088055**

(87) Numéro de publication internationale:
**WO 2023/126509 (06.07.2023 Gazette 2023/27)**

(54) **PROCEDE DE CALIBRATION EN ENERGIE D'UN DETECTEUR SPECTROMETRIQUE**

VERFAHREN ZUR ENERGIEKALIBRIERUNG EINES SPEKTROMETRIEDETEKTORS

METHOD FOR THE ENERGY CALIBRATION OF A SPECTROMETRY DETECTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.12.2021 FR 2114708**

(43) Date de publication de la demande:
**06.11.2024 Bulletin 2024/45**

(73) Titulaires:
• **Commissariat à l'Energie Atomique et aux Energies
Alternatives
75015 Paris (FR)**
• **CentraleSupélec
91190 Gif-sur-Yvette (FR)**
• **Centre National de la Recherche Scientifique
75794 Paris (FR)**
• **Université Paris-Saclay
91190 Gif-sur-Yvette (FR)**

(72) Inventeurs:
• **THIS, Kélian
21120 Is sur Tille (FR)**
• **FRIGERIO, Adrien
21120 Is sur Tille (FR)**
• **COLAS, Sébastien
21120 Is sur Tille (FR)**
• **LE BRUSQUET, Laurent
91190 GIF SUR YVETTE (FR)**

(74) Mandataire: **INNOV-GROUP
209 Avenue Berthelot
69007 Lyon (FR)**

(56) Documents cités:
**EP-A1- 3 674 753     US-A1- 2020 379 133**

**Description**

## DOMAINE TECHNIQUE

Le domaine technique de l'invention est la spectrométrie appliquée à la détection de rayonnements.

## ART ANTERIEUR

Les dispositifs de détection de rayonnement ionisants, basés sur des matériaux détecteurs gazeux, semi-conducteurs ou scintillateurs, permettent d'obtenir des impulsions électriques formées par des interactions du rayonnement dans le matériau détecteur. L'amplitude de chaque impulsion dépend de l'énergie déposée par le rayonnement au cours de chaque interaction. Ces dispositifs sont usuellement couplés à des circuits de mesure spectrométriques. De tels dispositifs permettent d'obtenir un spectre, qui correspond à un histogramme des amplitudes détectées au cours d'une période d'exposition. Le spectre est établi selon différents canaux d'amplitude, usuellement plusieurs centaines ou plusieurs milliers de canaux. A chaque canal correspond une bande étroite d'amplitude. Chaque canal est assigné d'une valeur, correspondant à un nombre d'impulsions, détectées durant la période d'exposition, dont l'amplitude est située dans la bande d'amplitude correspondant au canal.

Les systèmes de mesures spectrométriques sont à présent largement industrialisés. Les domaines d'application sont larges, et comprennent notamment les mesures de déchets, d'équipements ou d'installations nucléaires, ou la surveillance radiologique de l'environnement. Des logiciels permettent le paramétrage du traitement des impulsions, ainsi que le pilotage et le dépouillement automatisé de mesures.

Cependant, certaines étapes sont délicates et laissent encore une large place à des réglages manuels. Il s'agit par exemple de la calibration en énergie, qui permet d'établir une relation entre l'amplitude d'une impulsion et l'énergie libérée par l'interaction ayant donné lieu à l'impulsion. La relation entre l'amplitude et l'énergie dépend du détecteur utilisé, ainsi que des paramétrages du circuit de mesure spectrométrique, par exemple le gain d'amplification, des paramètres de mise en forme des impulsions ou le nombre de canaux. De plus, pour un même dispositif, sans modification des réglages, la relation entre l'amplitude et l'énergie peut subir des dérives, ce qui nécessite une calibration périodique.

La calibration en énergie est usuellement effectuée en exposant un détecteur à un objet de calibration dont les énergies d'émission sont connues. L'objet de calibration peut notamment comporter un ou plusieurs isotopes dont les énergies d'émission sont connues. La calibration consiste à acquérir un spectre des photons émis par les isotopes, puis d'identifier les principaux pics présents dans le spectre. Une partie des pics détectés correspond à une énergie d'émission connue. Chaque pic détecté s'étend de part et d'autre d'un canal central. La calibration en énergie permet de déterminer différents couples canal (i-e le canal central d'un pic) - énergie d'émission. A partir de ces différents couples, on détermine une fonction analytique, dite fonction de calibration, reliant le rang de chaque canal à une énergie. Le document US2020/379133 A1 décrit une calibration en énergie d'un spectre basée sur le recours à un réseau de neurones artificiel de type Deep Learning. En particulier, le réseau de neurones est utilisé pour déterminer des positions de pics d'émission de sources ponctuelles et dont les énergies d'émission sont connues. Il s'agit dans un second temps d'ajuster une fonction de calibration de façon à obtenir une correspondance entre chaque énergie et la position de chaque pic.

La calibration en énergie est une opération fréquente, qui doit être effectuée avec précision, afin de ne pas fausser l'interprétation de mesures. L'invention décrite ci-après facilite l'automatisation et la répétabilité de calibration en énergie. Elle peut également permettre de maximiser le nombre de pics pris en compte pour déterminer la fonction de calibration.

## EXPOSE DE L'INVENTION

Un premier objet de l'invention est un procédé de traitement d'un spectre de calibration, selon la revendication 1, formé par un dispositif de mesure spectrométrique, le dispositif comportant :

-    un détecteur, configuré pour détecter des particules, et pour former, à chaque détection, une impulsion dont l'amplitude dépend d'une énergie d'une particule ayant interagi dans le détecteur ;
-    un circuit de mesure spectrométrique, configuré pour former un spectre, le spectre correspondant à un nombre de particules détectées dans des canaux, à chaque canal étant assigné un rang, à chaque rang correspondant une amplitude d'impulsion;

le procédé comportant les étapes suivantes :

-    a) disposition du dispositif face à un objet de calibration, l'objet de calibration émettant, vers le détecteur, des particules de différentes énergies d'émission connues ;

- b) détection d'une partie des particules par le détecteur et formation d'un spectre de calibration des particules détectées, le spectre comportant différents pics, chaque pic correspondant à une énergie connue ;
- c) assignation d'un rang de canal à chaque pic détecté;
- d) à partir des rangs des canaux assignés à différents pics lors de l'étape c) et des énergies d'émission, détermination d'une fonction de calibration, la fonction de calibration déterminant une énergie à partir du rang de chaque canal, la fonction de calibration étant une fonction bijective ;

le procédé étant caractérisé en ce que l'étape d) comporte les sous-étapes suivantes:

- d-i) prise en compte d'un modèle analytique de la fonction de calibration, le modèle analytique étant paramétré par un ensemble de paramètres ;
- d-ii) pour différentes valeurs de chaque paramètre :

  • application de la fonction de calibration au rang de chaque canal assigné à chaque pic détecté, de façon à obtenir, pour chaque rang, une énergie déterminée par la fonction de calibration ;
  • ou application de la fonction réciproque de la fonction de calibration à chaque énergie d'émission, de façon à obtenir, pour chaque énergie d'émission, un canal déterminé par la fonction réciproque ;

- d-iii) détermination de la valeur de chaque paramètre pour laquelle :

  • les énergies déterminées lors de d-ii) sont les plus proches des énergies d'émission de l'objet de calibration ;
  • les canaux déterminés lors de d-ii) sont les plus proches des canaux assignés à chaque pic détecté.

Toujours selon l'invention telle que définie dans la revendication 1, lasous-étape d-iii) comporte :

- calcul d'une fonction de vraisemblance de la valeur de chaque paramètre ;
- estimation de la valeur de chaque paramètre maximisant la fonction de vraisemblance.

L'étape c) peut comporter une détermination d'une largeur de chaque pic. La fonction de vraisemblance peut alors prendre en compte la largeur de chaque pic.

La sous-étape d-iii) peut comporter:

- prise en compte de différents couples, chaque couple comportant une énergie d'émission et un canal assigné à un pic, suite à l'étape c);
- détermination de la valeur de chaque paramètre pour laquelle la fonction de calibration permet de relier plusieurs couples, chaque valeur déterminée formant une valeur initiale de chaque paramètre ;
- pour chaque valeur initiale, définition d'un domaine de recherche s'étendant autour de ladite valeur initiale, de façon que la valeur de chaque paramètre maximisant la fonction de vraisemblance est estimée dans les domaines de recherches définis autour des valeurs initiales dudit paramètre.

La sous-étape d-iii) est préférentiellement mise en œuvre par un algorithme d'optimisation.

Selon une possibilité, l'étape c) comporte une sélection des pics du spectre de calibration en fonction d'un critère de sélection du pic. Le critère de sélection peut être un nombre de photons détectés dans chaque pic ou un rapport signal sur bruit déterminé pour chaque pic.

La sous-étape d-iii) peut comporter une prise en compte d'un a-priori sur la valeur d'au moins un paramètre pour déterminer la valeur dudit paramètre.

Les particules peuvent être choisies parmi : photons, neutrons, particules chargées.

Un deuxième objet de l'invention est un dispositif destiné à acquérir un spectre de particules émises par un objet, le dispositif comportant :

- un détecteur, configuré pour détecter des particules, et pour former, à chaque détection, une impulsion dont l'amplitude dépend d'une énergie libérée la particule ayant interagi dans le détecteur ;
- un circuit de mesure spectrométrique, configuré pour former un spectre, le spectre correspondant à une distribution des amplitudes des impulsions détectées par le détecteur ;
- une unité de traitement, programmée pour mettre en œuvre l'étape d) d'un procédé selon le premier objet de l'invention à partir du spectre.

Un troisième objet de l'invention est un support, destiné à être connecté à un ordinateur, comportant des instructions pour la mise en œuvre de l'étape d) d'un procédé selon le premier objet de l'invention à partir d'un spectre représentatif de l'énergie de particules détectées. Le support peut être intégré dans l'ordinateur ou relié à l'ordinateur par une liaison filaire ou sans fil.

L'invention sera mieux comprise à la lecture de l'exposé des exemples de réalisation présentés, dans la suite de la description, en lien avec les figures listées ci-dessous.

## FIGURES

La figure 1 représente un exemple de dispositif permettant une mise en œuvre de l'invention.

La figure 2A représente un exemple de spectre.

La figure 2B est un détail de la figure 2A.

La figure 3 montre un pic d'un spectre ainsi que l'application d'un opérateur différentiel linéaire d'ordre 2 au spectre.

La figure 4 montre les principales étapes d'un mode de réalisation d'un procédé selon l'invention.

La figure 5 illustre des correspondances entre des énergies d'émission et des canaux centraux de pics de détection.

La figure 6 illustre des correspondances entre des canaux centraux de pics de détection (axe des abscisses) et des énergies d'émission (axe des ordonnées).

Les figures 7A et 7B montrent un spectre de calibration acquis avec un détecteur Germanium. On a également représenté la position de canaux assignés à différents pics détectés.

La figure 7C montre la valeur d'une fonction de vraisemblance d'un paramètre de la fonction de calibration pour différentes valeurs dudit paramètre. La figure 7C correspond au spectre représenté sur les figures 7A et 7B.

La figure 7D est un détail de la figure 7C.

La figure 7E montre la valeur d'une fonction de vraisemblance d'un autre paramètre de la fonction de calibration pour différentes valeurs dudit paramètre. La figure 7E correspond au spectre représenté sur les figures 7A et 7B.

La figure 7F est un détail de la figure 7E.

La figure 7G illustre des correspondances entre des canaux assignés à des pics de détection (axe des abscisses) du spectre représenté sur la figure 7A et des énergies d'émission (axe des ordonnées).

La figure 8A montre un spectre de calibration acquis avec un détecteur LaBr3 (Bromure de Lanthane). On a également représenté la position de canaux assignés à différents pics détectés ainsi qu'une plage d'incertitude relative à la position.

La figure 8B montre la valeur d'une fonction de vraisemblance d'un paramètre de la fonction de calibration pour différentes valeurs dudit paramètre. La figure 8B correspond au spectre représenté sur la figure 8A.

La figure 8C est un détail de la figure 8B.

La figure 8D montre la valeur d'une fonction de vraisemblance d'un autre paramètre de la fonction de calibration pour différentes valeurs dudit paramètre. La figure 8D correspond au spectre représenté sur la figure 8A.

La figure 8E est un détail de la figure 8D.

La figure 8F illustre des correspondances entre des canaux assignés à des pics de détection (axe des abscisses) du spectre représenté sur la figure 8A et des énergies d'émission (axe des ordonnées).

## EXPOSE DE MODES DE REALISATION PARTICULIERS

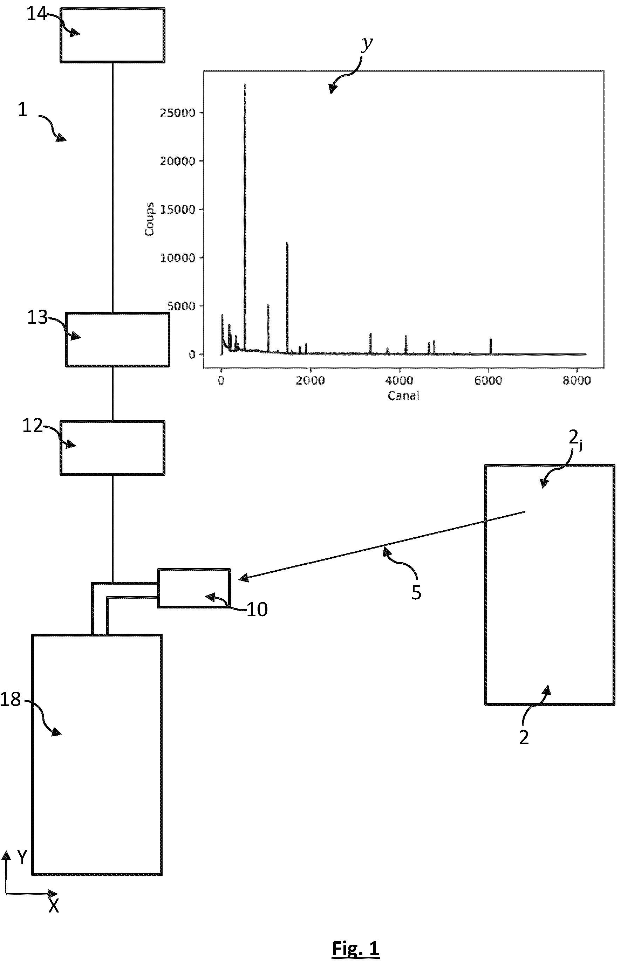

On a représenté, sur la figure 1, un dispositif 1 permettant la mise en œuvre d'invention. Le dispositif est un système de mesure, comportant un détecteur 10, apte à interagir avec un rayonnement 5 émis par un objet 2. L'objet 2 est ici un déchet nucléaire, pouvant comporter différents isotopes irradiants $2_j$. Généralement, les isotopes irradiants susceptibles d'être présents dans un objet mesuré sont préalablement connus. On peut notamment constituer une liste comportant des isotopes irradiants potentiellement présents dans l'objet analysé. L'indice j désigne chaque isotope irradiant.

Dans l'exemple représenté, le détecteur 10 est configuré pour détecter un rayonnement photonique ionisant. Par rayonnement photonique ionisant, on entend un rayonnement photonique de type X ou gamma, formé de photons dont l'énergie est par exemple comprise entre 1 keV et 2 MeV. Le procédé selon l'invention s'applique à la détection d'autres particules, par exemple des neutrons, des particules chargées (par exemple rayonnement $\alpha$ ou rayonnement $\beta$-), ou des photons.

Dans l'exemple représenté, le détecteur comporte un matériau semi-conducteur, de type Germanium (Ge), mais il pourrait également s'agir d'un matériau semi-conducteur communément mis en œuvre pour la détection de photons ionisants, par exemple de type Si, CdTe, CdZnTe. Les photons formant le rayonnement incident interagissent dans le matériau détecteur. Le matériau détecteur est soumis à une tension de polarisation V. Chaque interaction génère des porteurs de charges, lesquels sont collectés par une électrode, généralement une anode.

D'autres types de détecteurs, par exemple des scintillateurs couplés à un convertisseur photons/porteurs de charge, ou un détecteur gazeux de type chambre d'ionisation, sont utilisables, dès lors qu'ils permettent la collecte d'une quantité de charges Q sous l'effet d'une énergie E libérée par le rayonnement ionisant au cours d'une interaction dans le détecteur 10. Parmi les détecteurs usuels de type scintillateur, on peut citer NaI(TI) ou $LaBr_3$.

Le détecteur 10 est relié à un circuit électronique 12, configuré pour générer une impulsion dont l'amplitude dépend, et est de préférence proportionnelle, à la quantité de charge collectée lors d'une interaction. La quantité de charge correspond à l'énergie déposée par le rayonnement au cours de l'interaction.

Dans l'exemple représenté, le détecteur 10 est relié à un cryostat 16, comportant de l'azote liquide pour maintenir le détecteur Ge à une température de fonctionnement.

Le circuit électronique 12 est relié à une unité de spectrométrie 13, disposée en aval du circuit électronique, qui permet de rassembler l'ensemble des impulsions formées durant une durée d'acquisition. Chaque impulsion correspond à une interaction du rayonnement incident dans le matériau de détection. Le circuit de spectrométrie classe alors les impulsions en fonction de leur amplitude $A$, pour fournir un histogramme comportant le nombre d'impulsions détectées en fonction de leur amplitude. Cet histogramme est un spectre en amplitude. Il est usuellement obtenu en utilisant un analyseur multicanaux. Chaque amplitude est discrétisée selon des canaux, à chaque canal étant assignée une bande d'amplitude. La valeur de chaque canal du spectre correspond à un nombre d'impulsions dont l'amplitude est située dans la bande d'amplitude assignée au canal. Chaque bande d'amplitude correspond à une bande d'énergie, la correspondance étant bijective. Ainsi, à chaque canal est assignée une bande d'énergie ou une bande d'amplitude.

La relation entre amplitude et énergie peut être réalisée en irradiant le détecteur à l'aide d'un objet de calibration, émettant un rayonnement dont on connaît l'énergie. Il s'agit en particulier d'un rayonnement présentant au moins une discontinuité, ou pic d'énergie, à une valeur connue de l'énergie. Cette opération est usuellement désignée par le terme étalonnage en énergie. Dans le cadre de la spectrométrie gamma, on expose le détecteur à une source de calibration de type $^{152}$Eu, produisant des photons à des énergies d'émission connues. On peut également mettre en œuvre d'autres sources isotopiques, comme décrit par la suite dans un des exemples de réalisation. Il est préférable que l'isotope ou les isotopes soient tels que des photons soient émis selon au moins deux énergies d'émission différentes. Les énergies d'émission s'étendent entre une valeur minimale et une valeur maximale. Il est préférable que l'écart entre la valeur minimale et la valeur maximale couvre le domaine spectral dans lequel le détecteur est destiné à être utilisé.

La calibration en énergie permet d'établir une fonction de calibration $f_e$, permettant d'établir une relation analytique entre l'amplitude mesurée et l'énergie. La prise en compte de la fonction de calibration $f_e$ permet, par un changement de variable, d'assigner la valeur des canaux à des valeurs d'énergies à la place des amplitudes. En effet, les amplitudes dépendent du détecteur et des réglages effectués, tandis que les énergies correspondent à des grandeurs physiques fixes, indépendantes du détecteur.

Le spectre $y$ est un histogramme des amplitudes de chaque impulsion détectée, discrétisée selon des canaux d'énergie ou d'amplitude. A chaque canal est assignée une bande d'amplitude qui, par l'application de la fonction de calibration, devient une bande d'énergie. Le spectre $y$ peut être exprimé sous la forme d'un vecteur $(y_1, ... y_k ... , y_n)$, où $n$ correspond au nombre total de canaux. A chaque canal est assigné un rang $k$, avec $1 \leq k \leq n$. Chaque canal de rang $k$ est délimité par une amplitude inférieure $A_k$ et une amplitude supérieure $A_{k+1}$, de telle sorte qu'une impulsion détectée est affectée au canal de rang $k$ lorsque son amplitude est comprise entre $A_k$ et $A_{k+1}$.

L'amplitude inférieure $A_k$ de chaque canal correspond à une énergie inférieure $e_k$. L'amplitude supérieure $A_{k+1}$ de chaque canal correspond à une énergie supérieure $e_{k+1}$. La correspondance amplitude-énergie est établie par la fonction de calibration $f_e$ décrite en lien avec l'art antérieur. Ainsi,

$$e_k = f_e\left(\frac{k-1}{n}, \boldsymbol{\beta}\right) (1)$$

et

$$e_{k+1} = f_e\left(\frac{k}{n}, \boldsymbol{\beta}\right) (2)$$

$\beta$ est un ensemble de paramètres de la fonction $f_e$, décrit par la suite.

La grandeur $\frac{k-1/2}{n}$ correspond à une position du centre d'un canal de rang $k$ relativement au nombre $n$ de canaux du spectre. Il s'agit d'un rang normalisé de chaque canal, compris entre 1 (k=1) et (k = n). La normalisation permet d'établir une fonction de calibration indépendante du nombre de canaux $n$, ce dernier étant paramétrable.

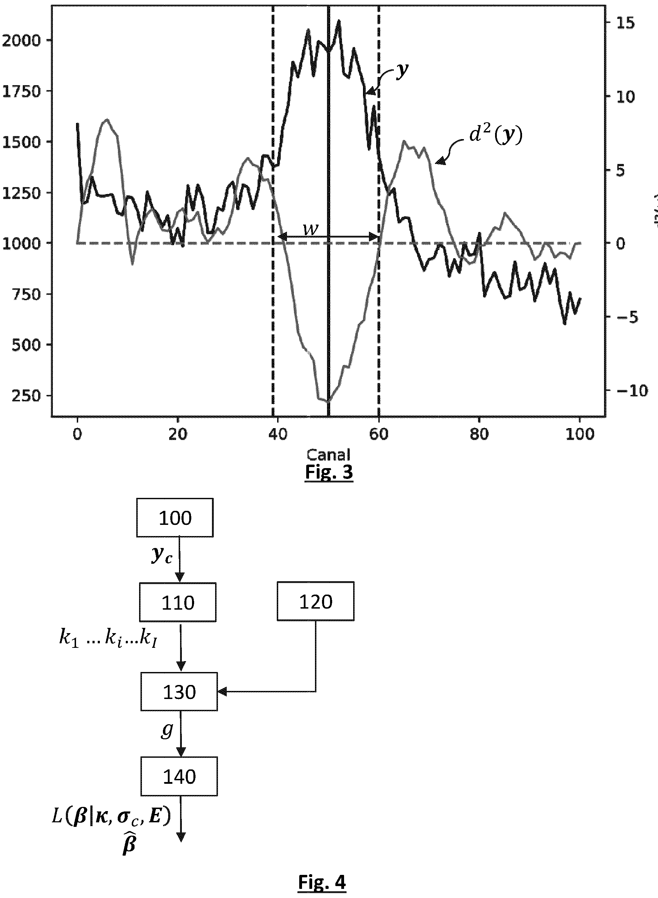

Le dispositif comporte une unité de traitement 14, programmée pour mettre en œuvre des étapes de l'algorithme décrit en lien avec la figure 4. L'unité de traitement 14 est reliée à l'unité de spectrométrie 13, dont elle reçoit chaque spectre mesuré.

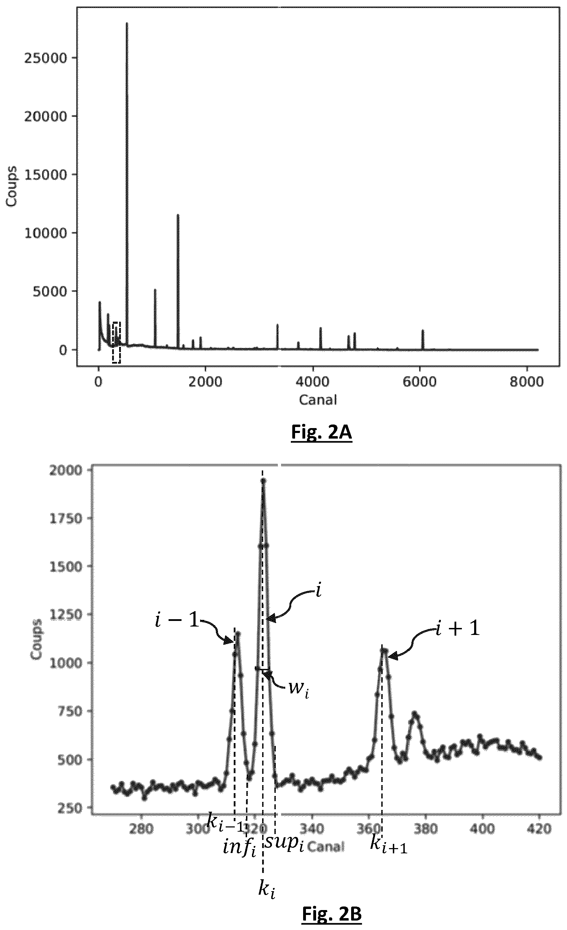

L'objectif d'une mesure par spectrométrie gamma est d'identifier les isotopes $2_j$ présents dans l'objet 2 et, de préférence, d'estimer leurs activités respectives. La figure 2A représente un spectre $y$ résultant d'un détecteur Germanium, exposé à une source comportant l'isotope $^{152}$Eu. L'axe des abscisses correspond aux canaux et l'axe des ordonnées correspond au nombre d'impulsions dont l'amplitude correspond à chaque canal. La figure 2B est un détail de la figure 2A, correspondant à la zone rectangulaire dessinée sur la figure 2A.

Le spectre $y$ représenté comporte plusieurs pics, chaque pic correspondant à une énergie d'émission d'un isotope présent dans l'objet 2. Ces pics forment l'information utile de chaque spectre, à partir de laquelle on peut identifier les isotopes et quantifier leurs activités respectives. Le spectre comporte également un continuum, correspondant à des diffusions de photons dans le détecteur ou avant d'atteindre le détecteur. Le continuum correspond à la partie du spectre sous et entre chaque pic. Le spectre comporte également une composante de bruit de fond, se traduisant par des fluctuations statistiques.

Une des étapes courantes d'un traitement de spectre est la détection de chaque pic. Sur la figure 2B, on a représenté différents pics. L'axe des abscisses correspond aux canaux d'amplitude tandis que l'axe des ordonnées correspond au nombre d'impulsion détectées dans chaque canal. L'unité de traitement peut ensuite déterminer un canal caractéristique de chaque pic, par exemple le canal central autour duquel le pic est centré. Le canal central est usuellement le canal comportant le plus grand nombre d'impulsions détectées.

Chaque pic est délimité par deux canaux, constituant respectivement les bornes inférieures $inf_i$ et supérieures $sup_i$ de chaque pic. Par la suite, chaque pic est assigné à un ordre $i$, par ordre d'amplitude croissante. Chaque pic d'ordre $i$ est identifié par le canal de rang $k_i$ de son canal central, ce dernier étant disposé entre la borne inférieure $inf_i$ et la borne supérieure $sup_i$ du pic.

Selon une possibilité, on peut délimiter manuellement chaque pic. La détection et la délimitation de chaque pic peuvent également être effectuées de façon automatique, en mettant par exemple en œuvre un opérateur de différenciation d'ordre 2, noté $d^2$. La figure 3 représente une partie d'un spectre $y$ correspondant à un pic. Sur la figure 3, on a également représenté un opérateur de différenciation d'ordre 2 appliqué au spectre $y$, noté $d^2(y)$. La ligne verticale, qui correspond à un minimum local de $d^2(y)$, permet d'identifier le canal de rang $k$ correspondant au centre du pic. L'opérateur de différenciation peut être un filtre de Savitzky et Golay d'ordre 3 et de largeur de fenêtre 11

La figure 4 schématise les principales étapes d'un procédé de détermination d'une fonction de calibration, ces étapes étant décrites ci-après.

Etape 100 : acquisition du spectre de calibration $y$. Au cours de cette étape, le détecteur est exposé à un objet de calibration. L'objet de calibration comporte généralement un ou plusieurs isotopes de calibration dont les énergies d'émission sont connues.

Etape 110 : détection des pics du spectre de calibration et assignation d'un canal à chaque pic détecté. On note $k_1 .... k_i .... k_I$ les rangs des canaux assignés à chaque pic détecté sur le spectre de calibration. $I$ désigne le nombre de pics détectés sur le spectre de calibration $y$, qui correspondent respectivement à des énergies d'émission $E'_1 ... E'_j .... E'_J$ des isotopes de calibration.

Chaque pic du spectre de calibration $y$ s'étend selon une largeur à mi-hauteur $w_i$. Un exemple de largeur à mi-hauteur est représenté sur la figure 2B.

La largeur à mi-hauteur est également déterminée lors de la détection des pics par des moyens usuels. Par exemple, lorsque la détection des pics est effectuée en appliquant un filtre de Savitsky et Golay tel que décrit en lien avec la figure 3, la largeur à mi-hauteur de chaque pic peut être estimée en déterminant le nombre de canaux entre deux passages par zéro de la fonction $d^2(y)$ de part et d'autre du minimum local correspondant au pic. Sur la figure 3, on a représenté une largeur à mi-hauteur w. La largeur à mi-hauteur peut être déterminée par d'autres moyens usuels de logiciels de spectrométrie, suite à une délimitation manuelle des pics.

Etape 120 : prise en compte d'un modèle analytique de la fonction de calibration $f_e$. Au cours de cette étape, on définit un modèle analytique de la fonction de calibration, par exemple une fonction linéaire ou un polynôme de degré prédéterminé. Le modèle est paramétré par un ensemble de paramètres $\beta$.

On suppose que chaque énergie $E_i$ correspondant à un pic détecté est située au centre du canal de rang $k_i$ qui rassemble les impulsions d'énergies comprises entre $e_i$ et $e_{i+1}$. Ainsi, on suppose que

$$E_i = \frac{e_i + e_{i+1}}{2} \ (3).$$

Compte tenu de (1), (2), et (3)

$$E_i = f_e\left(\frac{\frac{k_i + k_i - 1}{2}}{n}, \boldsymbol{\beta}\right) = f_e\left(\frac{k_i - \frac{1}{2}}{n}, \boldsymbol{\beta}\right)(4).$$

où :

- n correspond au nombre total de canaux du spectre.
- $k_i$ et $k_i + 1$ sont les amplitudes respectivement minimales et maximales du canal d'amplitude de rang $i$ correspondant à l'énergie $E_i$.

$k_i - \frac{1}{2}$ correspond à une amplitude médiane du canal de rang $i$, qui est supposée correspondre à l'énergie d'émission $E_i$.

La fonction de calibration peut être linéaire, auquel cas l'ensemble de paramètres est $\beta = (\beta_0; \beta_1)$ et:

$$E_i = \beta_0 + \beta_1 \left( \frac{k_i - \frac{1}{2}}{n} \right) (5)$$

Dans le cas d'un polynôme de degré 2, la fonction de calibration est de type :

$$E_i = \beta_0 + \beta_1 \left( \frac{k_i - \frac{1}{2}}{n} \right) + \beta_2 \left( \frac{k_i - \frac{1}{2}}{n} \right)^2 (5').$$

L'ensemble des paramètres est $\beta = (\beta_0; \beta_1; \beta_2)$.

La fonction de calibration $f_e$ est nécessairement bijective. Il est usuel que les canaux soient classés selon des amplitudes croissantes, auquel cas la fonction de calibration est croissante.

$E_i$ représente l'énergie correspondant à l'amplitude médiane du canal de rang $k_i$, par l'application de la fonction de calibration $f_e$. Ainsi, la fonction de calibration $f_e$ fait correspondre, à chaque canal de rang $k_i$, une énergie $E_i$.

L'objet de calibration émet des photons à des énergies d'émission $E'_1 \dots E'_j \dots E'_J$. $J$ correspond au nombre d'énergies d'émission. Tous les pics, correspondant à des énergies d'émission, peuvent ne pas être détectés par la détection de pics, par exemple si la quantité de photons dans un pic est trop faible. Les rangs $k_1 \dots k_i \dots k_I$ correspondant à certains pics détectés correspondent à certaines énergies d'émission $E'_1 \dots E'_j \dots E'_J$.

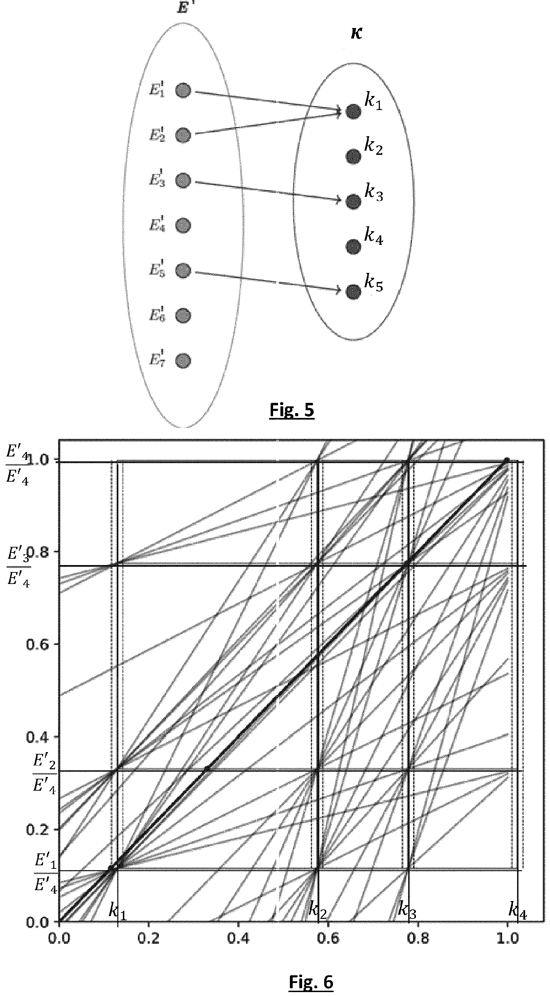

La figure 5 représente un exemple de canaux $k_1 \dots k_i \dots k_I$ ($I = 5$) correspondant à chaque pic détecté pris dans l'ordre croissant ($k_i > k_{i-1}$), ainsi que les énergies d'émission $E'_1 \dots E'_j \dots E'_J$ des isotopes, également pris dans l'ordre ($E'_j > E'_{j+1}$) croissant ($J = 7$). La fonction de calibration doit maximiser le nombre d'occurrences selon lesquelles

$$E'_j = f_e \left( \frac{k_i - \frac{1}{2}}{n}, \boldsymbol{\beta} \right).$$

Sur la figure 5, chaque occurrence est représentée par une flèche. Lorsque deux énergies d'émission sont rapprochées, elles peuvent être associées à un canal de même rang. Sur la figure 5, ce cas particulier est illustré par les énergies $E_1$ et $E_2$.

Etape 130 : Etablissement d'une densité de probabilité

A chaque énergie d'émission $E_1 \dots E_j \dots E_J$ correspond un canal de rang $x_1 \dots x_j \dots x_J$ par l'application de la fonction $f_e^{-1}$, de telle sorte que

$$x_j = n f_e^{-1}\left(E'_j, \boldsymbol{\beta}\right) + \frac{1}{2} (6)$$

La notation $f_e^{-1}(E'_j, \beta)$ désigne le fait que $f_e^{-1}$ dépend de $\beta$.

Comme précédemment indiqué, un pic détecté présente une certaine largeur spectrale $w_i$, induisant une incertitude sur le rang du canal $k_i$. On peut considérer que pour chaque énergie d'émission $E'_j$, le rang $k_i$ du canal dans lequel le pic est détecté est une variable suivant une densité de probabilité prédéterminée g, par exemple gaussienne, telle que :

$$g(k_i|x_j, \sigma_i) = \frac{1}{\sigma_i\sqrt{2\pi}}exp\left(-\frac{1}{2}\left(\frac{x_{j\_}k_i}{\sigma_i}\right)^2\right) \quad (7)$$

où :

- $x_j$ est le rang « vrai » du canal associé au pic d'énergie d'émission $E_j$ ;
- $k_i$ est le rang assigné au $i^{ème}$ pic détecté ;
-

$$\sigma_i = \frac{w_i.}{2}.$$

Partant de (7), on peut écrire :

$$g(\boldsymbol{\kappa}|\boldsymbol{x}, \boldsymbol{\sigma}) = \sum_{i=1}^{I}\sum_{j=1}^{J} g(k_i|x_j)P(i,j) \quad (8)$$

où :

- $\kappa$ est un vecteur comportant l'ensemble des rangs des canaux correspondant à des pics détectés : $\kappa = k_1 ... k_i ...k_I$
- $P(i,j)$ est une probabilité qu'un pic de rang $k_i$ corresponde à une énergie d'émission $E'_j$ ;
- $\sigma$ est le vecteur ($\sigma_1 ... \sigma_i ... \sigma_I$).

Toutes les combinaisons $k_i$, $E'_j$ sont considérées équiprobables. Ainsi, $P(i,j) = \frac{1}{IJ} (9)$

Etape 140 : établissement d'une fonction de vraisemblance et maximisation.
En prenant en compte (7), (8), et (9), on peut écrire :

$$g(\boldsymbol{\kappa}|\boldsymbol{E'}, \boldsymbol{\sigma}, \boldsymbol{\beta}) = \sum_{i=1}^{I}\sum_{j=1}^{J} \frac{1}{\sigma_i\sqrt{2\pi}IJ} exp\left(-\frac{1}{2}\left(\frac{nf_e^{-1}(E'_j, \boldsymbol{\beta}) + \frac{1}{2} - k_i}{\sigma_i}\right)^2\right)(10)$$

On en déduit une fonction de vraisemblance de $\beta$, notée $L(\beta|\kappa, (\sigma, \boldsymbol{E'})$ telle que :

$$L(\boldsymbol{\beta}|\boldsymbol{\kappa}, \boldsymbol{\sigma}, \boldsymbol{E'}) = g(\boldsymbol{\kappa}|\boldsymbol{E'}, \boldsymbol{\sigma}, \boldsymbol{\beta})(11)$$

**E'** correspond aux énergies d'émission des radionucléides utilisés pour la calibration : $\boldsymbol{E'} = E'_1 ... E'_j ...E'_J$.
On peut estimer le vecteur de paramètres $\hat{\beta}$ qui maximise la fonction de vraisemblance :

$$\widehat{\boldsymbol{\beta}} = \underset{\boldsymbol{\beta}}{\operatorname{argmax}} L(\boldsymbol{\beta}|\boldsymbol{E'}, \boldsymbol{\kappa}, \boldsymbol{\sigma}) \quad (12)$$

$$\widehat{\boldsymbol{\beta}} = \underset{\boldsymbol{\beta}}{\operatorname{argmax}}\left[\sum_{i=1}^{I}\sum_{j=1}^{J} \frac{1}{\sigma_i\sqrt{2\pi}IJ} exp\left(-\frac{1}{2}\left(\frac{nf_e^{-1}(E'_j, \boldsymbol{\beta}) + \frac{1}{2} - k_i}{\sigma_i}\right)^2\right)\right] \quad (13)$$

Le vecteur $\hat{\beta}$ est celui pour lequel le nombre de correspondances entre **E'** et $\kappa$ est maximisé. Cela revient à obtenir un maximum d'occurrences selon lesquelles $E'_j = f_e(k_i, \hat{\beta})$.
Le vecteur $\hat{\beta}$ ainsi obtenu permet de définir la fonction de calibration $f_e$.
La figure 6 illustre une situation selon laquelle la fonction $f_e$ est linéaire. La fonction $f_e$ est telle que :

$$f_e(k) = \beta_0 + \beta_1 \frac{k - \frac{1}{2}}{n} \, (14)$$

pour chaque canal de rang k.

De façon réciproque, une énergie $E_k$ correspond à un canal de rang k tel que :

$$\frac{k - \frac{1}{2}}{n} = f_e^{-1}(E_k) = \frac{E_k - \beta_0}{\beta_1} \, (15)$$

L'expression (13) devient :

$$\hat{\boldsymbol{\beta}} = \underset{\beta_0, \beta_1}{\operatorname{argmax}} \left[ \sum_{i=1}^{I} \sum_{j=1}^{J} \frac{1}{\sigma_i \sqrt{2\pi} IJ} \, exp\left( -\frac{1}{2{\sigma_i}^2} \left( \frac{n(E'_j - \beta_0)}{\beta_1} + \frac{1}{2} - k_i \right)^2 \right) \right] \quad (16)$$

L'algorithme d'optimisation, exprimé par (16), peut avantageusement être mis en œuvre autour de valeurs de $\beta_0$ et $\beta_1$ prédéterminées. Cela permet d'applique l'algorithme de maximisation dans un domaine de recherche prédéterminé autour des valeurs initiales prédéterminées de $\beta_0$ et $\beta_1$. Cela permet d'éviter des « pièges d'optimisation », correspondant à la détermination de maximas locaux de $\beta_0$ et $\beta_1$. Cela permet également d'optimiser le temps de calcul. Le domaine de recherche est défini autour de chaque couple de valeurs $\beta_0$ et $\beta_1$.

D'une façon plus générale, quelle que soit le type de fonction de calibration, le vecteur $\hat{\beta}$ est avantageusement déterminé en appliquant un algorithme d'optimisation, permettant de résoudre (16), sur la base d'un domaine de recherche restreint autour de valeurs initiales, discrètes, du vecteur $\hat{\beta}$. Le domaine de recherche correspond à un intervalle continu s'étendant autour de chaque valeur initiale.

La définition du domaine de recherche restreint est décrite ci-dessous, en lien avec la figure 6.

**Sur la figure 6,** l'axe des abscisses correspond au rang normalisé $\frac{k}{n}$ de chaque canal. L'axe des ordonnées correspond aux énergies d'émission $E'_j$ normalisées par l'énergie d'émission la plus élevée $E'_{j,max}$ avec $E'_{j,max} = E'_4$. Une énergie d'émission est détectée lorsqu'un canal lui est assigné.

On a représenté, par des lignes verticales noires, les canaux $k_i$ ayant été identifiés par la recherche de pics sur le spectre de calibration. Comme précédemment indiqué, les canaux d'énergie sont affectés d'une incertitude $w_i$, qui est matérialisée par deux lignes verticales fines de part et d'autre d'une ligne verticale noire. Les énergies d'émission normalisées $\frac{E'_j}{E'_{j,max}}$ correspondent à des lignes horizontales. Il s'agit de valeurs exactes, sans incertitude associée.

On a tracé, en gris, des droites qui passent par au moins deux intersections entre une énergie d'émission normalisée $\frac{E'_j}{E'_{j,max}}$ et un canal de détection $k_i$, en prenant en compte l'incertitude associée. Chaque intersection correspond à une correspondance $\frac{E'_j}{E'_{j,max}}$, $k_i$. On a pris en compte le fait que la fonction de calibration est nécessairement croissante lorsque les rangs des canaux sont ordonnés de façon croissante avec l'amplitude. Ainsi, on a représenté uniquement des droites pouvant correspondre à une fonction croissante ($\beta_1 > 0$). La droite représentée en noir est la droite présentant le nombre maximal d'intersections, en l'occurrence ( $E'_1$, $k_1$), ( $E'_3$, $k_3$), ( $E'_4$, $k_4$).

La figure 6 illustre la définition d'un domaine de recherche restreint pour mettre en œuvre l'algorithme d'optimisation précédemment décrit. Il s'agit de déterminer des valeurs initiales des paramètres de la fonction de calibration pour lesquelles l'application de la fonction de calibration, bijective, génère des occurrences entre $E'_j$ (ou $\frac{E'_j}{E'_{j,max}}$ ) et $f_e(k_i)$ ou, de façon réciproque, entre $k_i$ et $f_e^{-1}(E'_j)$. Autrement dit, on forme différents couples, chaque couple comportant une énergie d'émission et le rang d'un canal assigné à un pic détecté. L'algorithme d'optimisation décrit dans (16) est mis en œuvre autour de valeurs initiales du vecteur de paramètres $\hat{\beta}$ de la fonction de calibration pour lesquelles la fonction de calibration est la fonction vérifiant $E'_j = f_e(k_i)$ pour au moins deux couples dont les énergies et les rangs respectifs sont différents d'un couple à l'autre : autrement dit, pour deux couples ($E'_j$ ; $k_i$) et ($E'_{j'}$; $k_{i'}$), $E'_j \neq E'_{j'}$ et $k_i \neq k_{i'}$,

A partir de la figure 6, on peut établir différentes valeurs initiales de $\beta_0$ et $\beta_1$ avec :

$$\beta_1 = n \frac{E'_j - E'_{j'}}{k_i - k_{i'}} \quad (17)$$

et

$$\beta_0 = E'_{j'} - \beta_1 \frac{E'_j - 1}{n} \quad (18)$$

Selon une variante, les étapes 130 et 140 sont mises en œuvre en sélectionnant les énergies d'émission $E'_j$ les plus intenses et/ou les canaux $k_i$ pour lesquels les surfaces des pics sont les plus élevées, ou présentent un rapport signal sur bruit considéré comme élevé. Cela permet d'optimiser le temps de calcul. Selon cette variante, le nombre d'énergies d'émission et de canaux peuvent être limitées à quelques dizaines. On peut prendre par exemple $I$ = 30 et $J$ = 20. D'une façon plus générale, le procédé comporte une prise en compte d'un critère de sélection de chaque pic. Les pics traités dans les étapes 130 et 140 sont ceux qui satisfont au critère de sélection.

Selon une variante, lors de l'étape 140, on prend en compte un a priori sur les valeurs d'un ou plusieurs paramètres formant l'ensemble $\beta$. Par exemple, on définit une plage de variation pour un ou plusieurs paramètres. On impose que chaque paramètre, pour lequel un a priori est pris en compte, soit situé dans la plage de variation prédéfinie. La prise en compte d'un a priori permet d'éviter que l'algorithme d'optimisation génère des valeurs non réalistes de paramètres. L'a-priori constitue une contrainte pour la mise en œuvre de l'algorithme d'optimisation, s'ajoutant à la condition selon laquelle la fonction de calibration est monotone.

Essais expérimentaux

Les inventeurs ont mis en œuvre le procédé de calibration tel que précédemment décrit en utilisant deux types de détecteurs : un détecteur de type Ge (Germanium), tel que schématisé sur la figure 1, et un détecteur de type LaBr$_3$ (Bromure de Lanthane). Les résultats des calibrations sont à présent reportés.

Au cours d'une première série d'essais, on a effectué une calibration en énergie du détecteur Germanium. On a utilisé une source étalon de $^{152}$Eu, d'activité 35.04 KBq. On a acquis un spectre de calibration durant une durée de 3 heures. La source était placée à une distance de 40 cm du détecteur. Le spectre a été acquis selon 8192 canaux. La fonction de calibration a été considérée linéaire.

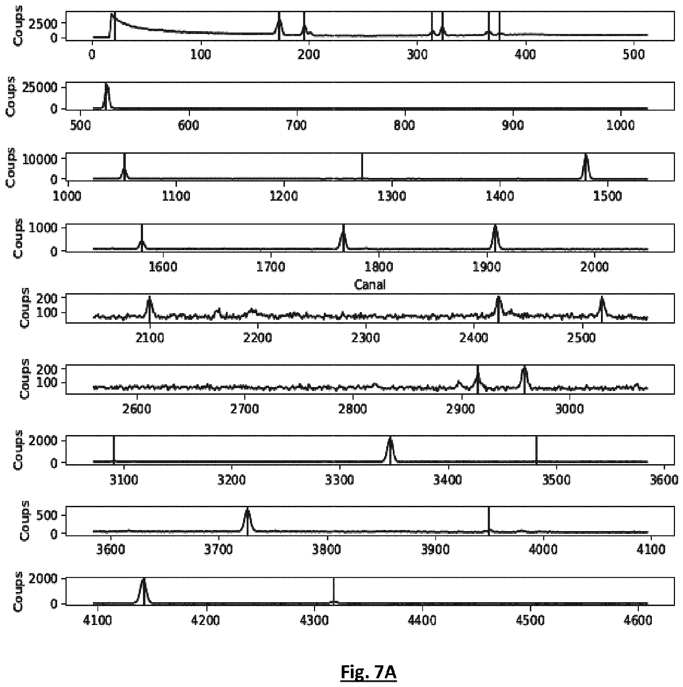

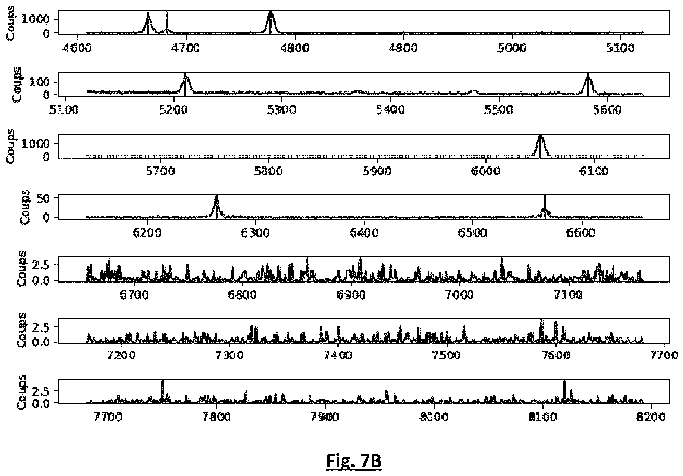

Les figures 7A et 7B représentent les canaux résultant de l'algorithme de détection de pic. On observe qu'il n'y a pas de pic détecté au-delà du canal de rang 6600. Sur les figures 7A et 7B, l'axe des abscisses correspond aux canaux et l'axe des ordonnées aux nombres d'impulsions (ou coups) détectées et assignées à chaque canal. Il s'agit d'une représentation spectrale classique.

La détection des pics a permis d'obtenir 179700 couples de correspondances possibles canal d'un pic détecté - énergie d'émission. En prenant en compte le fait que la fonction de calibration est croissante, on obtient 82650 couples possibles. Cela correspond à $J$ = 20 (nombre d'énergies d'émission considérées) et $I$ = 30 (nombre de pics détectés), le nombre $N_{couples}$ de couples possibles, correspondant à une fonction de calibration croissante, est égal à :

$$N_{couples} = \frac{IJ(IJ - I - J + 1)}{4}. \quad (19)$$

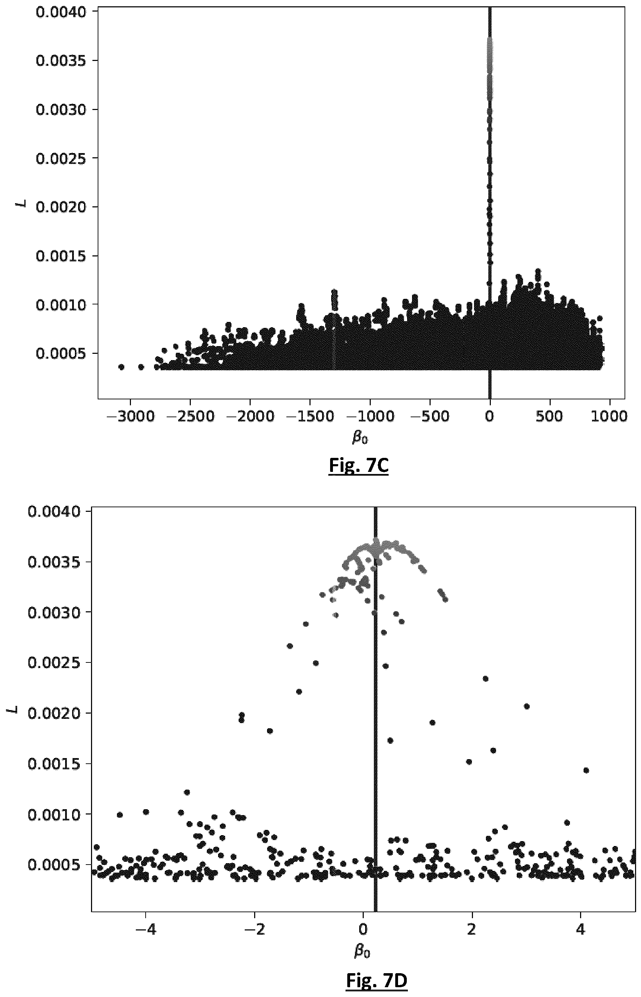

La figure 7C montre la valeur de la fonction de vraisemblance L (axe des ordonnées) en fonction de $\beta_0$ (axe des abscisses). La figure 7D est un détail de la figure 7B. La valeur de $\beta_0$ maximisant la fonction de vraisemblance est égale à 0.3689 keV.

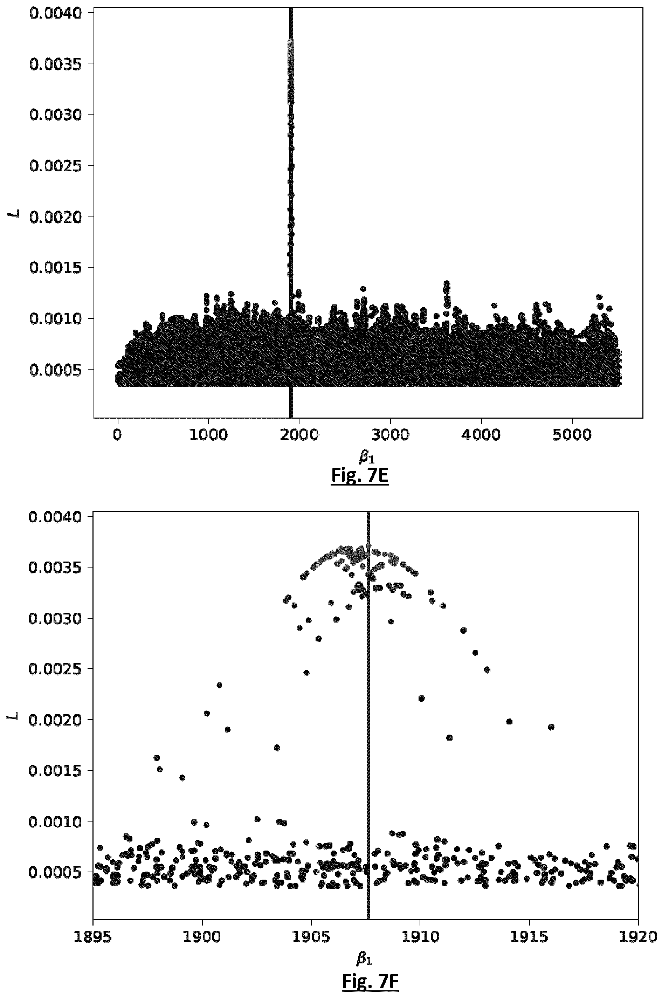

La figure 7E montre la valeur de la fonction de vraisemblance L (axe des ordonnées) en fonction de $\beta_1$ (axe des abscisses). La figure 7F est un détail de la figure 7E. La valeur de $\beta_1$ maximisant la fonction de vraisemblance est égale à 1907.2475 keV.

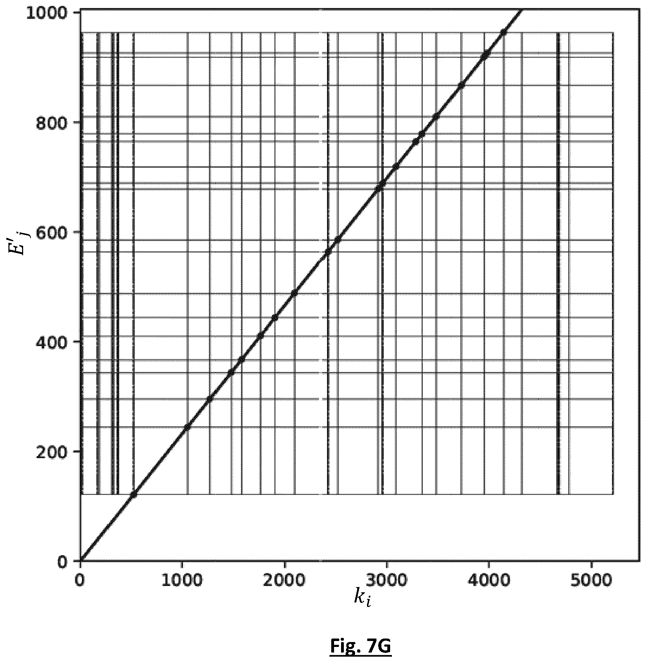

La figure 7G est une représentation similaire à la figure 6 précédemment décrite. L'axe des abscisses correspond aux rangs des canaux des pics détectés, ainsi que l'incertitude associée.

L'axe des ordonnées correspond aux énergies d'émission de $^{152}$Eu (keV). L'application de la fonction de calibration prenant en compte les valeurs $\beta_0$ et $\beta_1$ optimales permet de maximiser le nombre de correspondances entre les canaux des pics détectés et les énergies d'émission.

Au cours d'une deuxième série d'essais, on a effectué une calibration en énergie du détecteur LaBr$_3$. On a utilisé

des sources étalon de $^{22}$Na, $^{57}$Co, $^{60}$Co et $^{133}$Ba. Les énergies d'émission prépondérantes étaient 276.4 keV, 302.85 keV, 356.01 keV, 383.85 keV, 511 keV, 1173.23 keV, 1274.54 keV, 1332.49 keV. Le spectre a été acquis selon 4096 canaux. La fonction de calibration a été considérée linéaire.

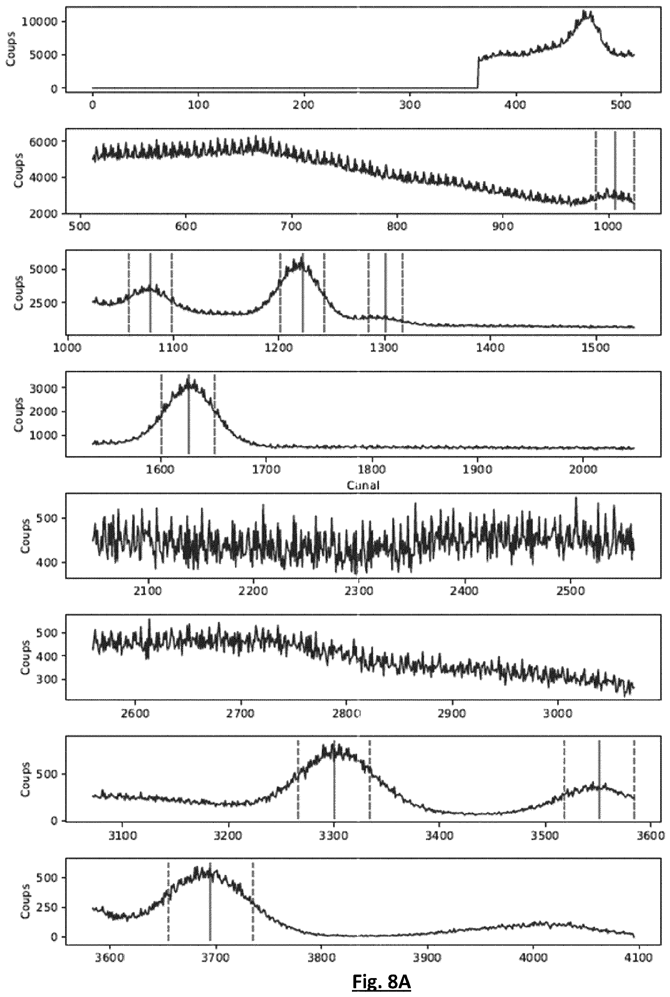

La figure 8A représente les canaux résultant de l'algorithme de détection de pic. 8 pics ont été détectés, ce qui correspond au nombre d'énergie d'émission. La détection des pics a permis d'obtenir 1568 points en prenant en compte le fait que la fonction de calibration est croissante.

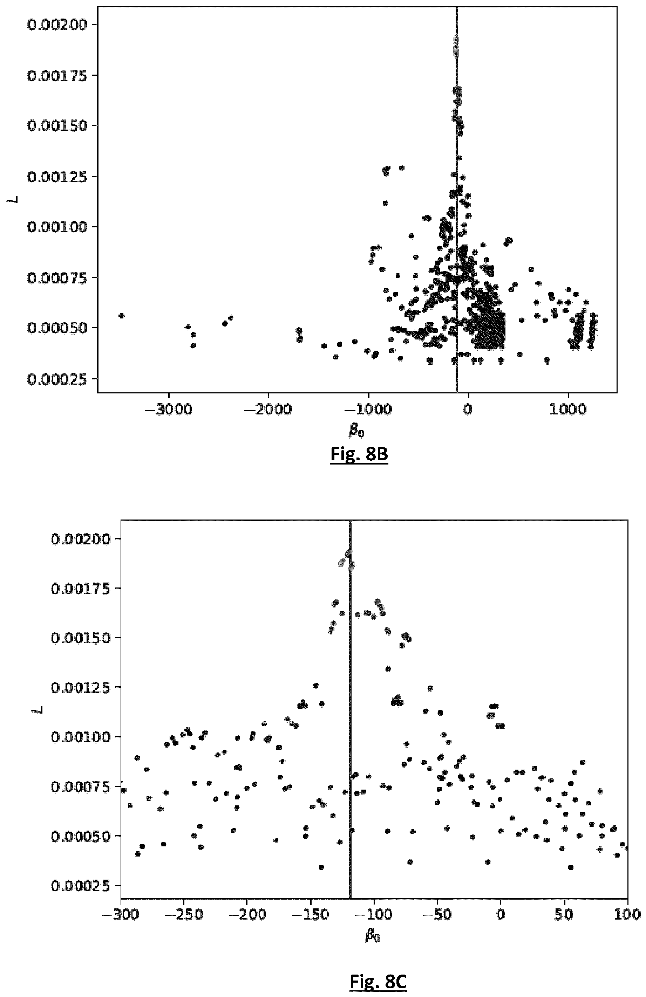

La figure 8B montre la valeur de la fonction de vraisemblance L (axe des ordonnées) en fonction de $\beta_0$ (axe des abscisses). La figure 8C est un détail de la figure 8B. La valeur de $\beta_0$ maximisant la fonction de vraisemblance est égale à -120.7273 keV.

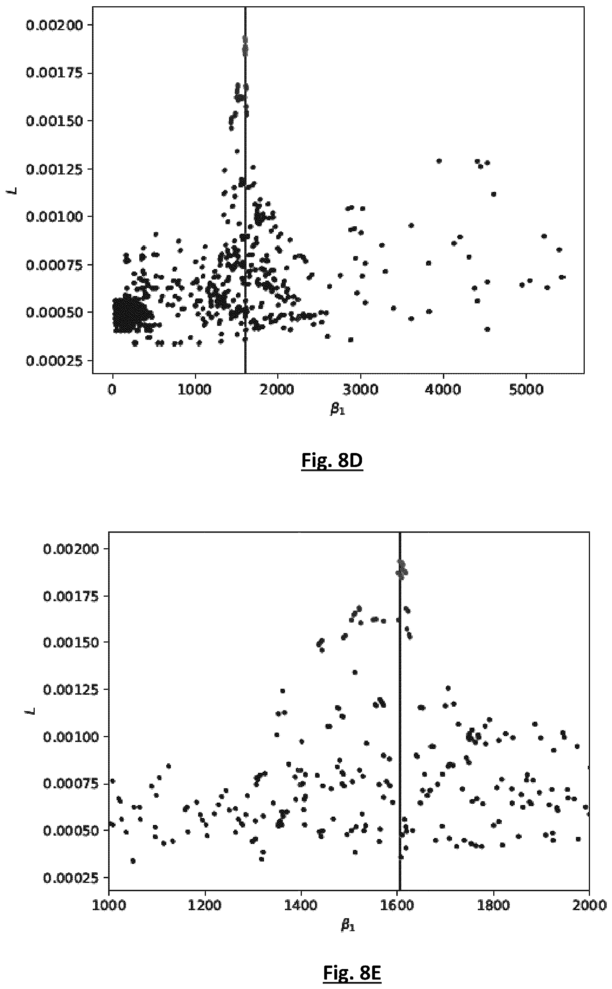

La figure 8D montre la valeur de la fonction de vraisemblance L (axe des ordonnées) en fonction de $\beta_1$ (axe des abscisses). La figure 8E est un détail de la figure 8D. La valeur de $\beta_1$ maximisant la fonction de vraisemblance est égale à 1607.1911 keV.

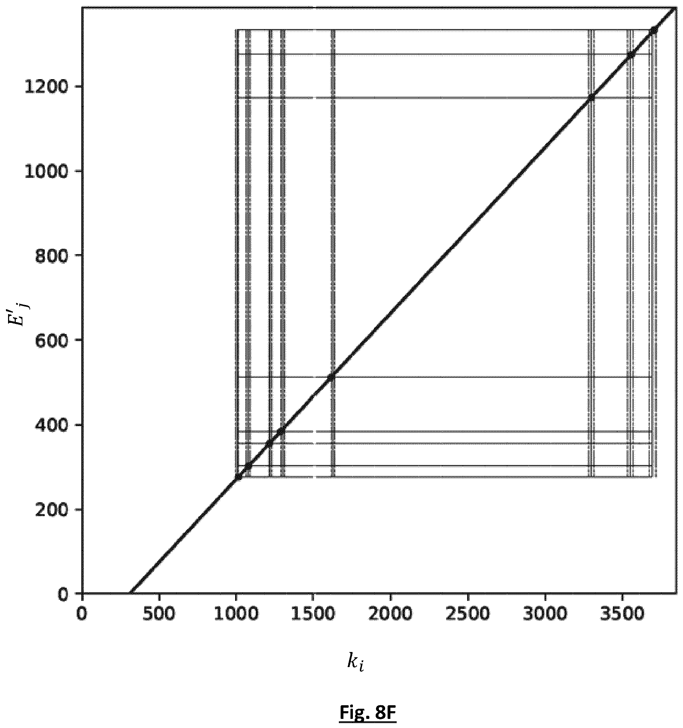

La figure 8F est similaire aux figures 7F et 6 précédemment décrites. L'axe des abscisses correspond aux rangs des canaux des pics détectés, ainsi que l'incertitude associée. L'axe des ordonnées correspond aux énergies d'émission précédemment listées. L'application de la fonction de calibration prenant en compte les valeurs $\beta_0$ et $\beta_1$ permet de maximiser le nombre de correspondances entre les canaux des pics détectés et les énergies d'émission.

La fonction de calibration peut être différente d'une fonction linéaire. Il peut par exemple s'agir d'un polynôme de degré supérieur ou égal à 2.

L'invention a été décrite en lien avec la spectrométrie gamma. Elle peut être généralisée à la spectrométrie de rayonnement d'autres types de photons, ou d'autres types de particules, en particulier neutrons ou particules chargées. Elle peut également être mise en œuvre dans la détection de photons non ionisants, par exemple des photons des domaines spectraux infrarouge, visible ou proche ultraviolet.

On comprend que l'invention peut être appliquée à la spectrométrie de masse. Dans ce cas, le détecteur spectrométrique est configuré pour former des impulsions dont l'amplitude dépend de la masse de particules ayant interagi dans le détecteur. L'établissement de la fonction de calibration est effectué en exposant le détecteur à un objet de calibration, comportant des particules de différentes masses, ces dernières étant connues. La fonction de calibration permet d'effectuer un lien bijectif entre l'amplitude de chaque impulsion et la masse des particules détectées par le détecteur.

**Revendications**

**1.** Procédé de traitement d'un spectre de calibration (y) formé par un dispositif de mesure spectrométrique (1), le dispositif comportant :

- un détecteur (10), configuré pour détecter des particules, et pour former, à chaque détection, une impulsion dont l'amplitude dépend d'une énergie d'une particule ayant interagi dans le détecteur ;
- un circuit de mesure spectrométrique (12, 13), configuré pour former un spectre, le spectre correspondant à un nombre de particules détectées dans des canaux, à chaque canal étant assigné un rang, à chaque rang correspondant une amplitude d'impulsion;

le procédé comportant les étapes suivantes :

- a) disposition du dispositif face à un objet de calibration (2), l'objet de calibration émettant, vers le détecteur, des particules de différentes énergies d'émission ($E'_j$)connues;
- b) détection d'une partie des particules par le détecteur et formation d'un spectre de calibration (y) des particules détectées, le spectre comportant différents pics, chaque pic correspondant à une énergie connue ;
- c) assignation d'un rang de canal ($k_i$) à chaque pic détecté;

- d) à partir des rangs des canaux assignés à différents pics lors de l'étape c) et des énergies d'émission ( $E'_j$ ), détermination d'une fonction de calibration, la fonction de calibration déterminant une énergie à partir du rang de chaque canal, la fonction de calibration étant une fonction bijective ;

le procédé étant **caractérisé en ce que** l'étape d) comporte les sous-étapes suivantes :

- d-i) prise en compte d'un modèle analytique de la fonction de calibration ($f_e$), le modèle analytique étant paramétré par un ensemble de paramètres ($\beta$);
- d-ii) pour différentes valeurs de chaque paramètre :

• application de la fonction de calibration au rang de chaque canal assigné à chaque pic détecté, de façon à obtenir, pour chaque rang, une énergie déterminée par la fonction de calibration ;
• ou application de la fonction réciproque de la fonction de calibration à chaque énergie d'émission, de façon à obtenir, pour chaque énergie d'émission, un canal déterminé par la fonction réciproque ;

- d-iii) détermination de la valeur de chaque paramètre pour laquelle :

• les énergies déterminées lors de d-ii) sont les plus proches des énergies d'émission de l'objet de calibration ;

les canaux déterminés lors de d-ii) sont les plus proches des canaux assignés à chaque pic détecté;le procédé étant **caractérisé en ce que** la sous-étape d-iii) comporte :

- calcul d'une fonction de vraisemblance de la valeur de chaque paramètre $L(\beta|\kappa, \sigma, E')$;
- estimation de la valeur de chaque paramètre $(\hat{\beta})$ maximisant la fonction de vraisemblance.

2. Procédé selon la revendication 1, dans lequel

- l'étape c) comporte une détermination d'une largeur $(w_i)$ de chaque pic ;
- la fonction de vraisemblance prend en compte la largeur de chaque pic.

3. Procédé selon l'une quelconque des revendications 1 ou 2, dans lequel la sous-étape d-iii) comporte:

- prise en compte de différents couples $((E'_j;k_i))$, chaque couple comportant une énergie d'émission et un canal assigné à un pic, suite à l'étape c);
- détermination de la valeur de chaque paramètre pour laquelle la fonction de calibration permet de relier plusieurs couples, chaque valeur déterminée formant une valeur initiale de chaque paramètre ;
- pour chaque valeur initiale, définition d'un domaine de recherche s'étendant autour de ladite valeur initiale, de façon que la valeur de chaque paramètre maximisant la fonction de vraisemblance est estimée dans les domaines de recherches définis autour des valeurs initiales dudit paramètre.

4. Procédé selon l'une quelconque des revendications précédentes, dans lequel la sous-étape d-iii) est mise en œuvre par un algorithme d'optimisation.

5. Procédé selon l'une quelconque des revendications précédentes, dans lequel l'étape c) comporte une sélection des pics du spectre de calibration en fonction d'un critère de sélection du pic.

6. Procédé selon la revendication 5, dans lequel le critère de sélection est un nombre de photons détectés dans chaque pic ou un rapport signal sur bruit déterminé pour chaque pic.

7. Procédé selon l'une quelconque des revendications précédentes, dans lequel la sous-étape d-iii) comporte une prise en compte d'un a-priori sur la valeur d'au moins un paramètre pour déterminer la valeur dudit paramètre.

8. Procédé selon l'une quelconque des revendications précédentes, dans lequel les particules sont choisies parmi : photons, neutrons, particules chargées.

9. Dispositif (1) destiné à acquérir un spectre de particules émises par un objet, le dispositif comportant :

- un détecteur (10), configuré pour détecter des particules, et pour former, à chaque détection, une impulsion dont l'amplitude dépend d'une énergie libérée la particule ayant interagi dans le détecteur ;
- un circuit de mesure spectrométrique (12), configuré pour former un spectre (y), le spectre correspondant à une distribution des amplitudes des impulsions détectées par le détecteur ;
- ledit dispositif étant **caractérisé en ce qu'**il comporte une unité de traitement (14), programmée pour mettre en œuvre l'étape d) d'un procédé selon l'une quelconque des revendications précédentes à partir du spectre.

10. Support, destiné à être connecté à un ordinateur, comportant des instructions pour la mise en œuvre de l'étape d) d'un procédé selon l'une quelconque des revendications 1 à 8 à partir d'un spectre représentatif de l'énergie de particules détectées.

**Patentansprüche**

1.  Verfahren zur Verarbeitung eines Kalibrierungsspektrums (y), das von einer spektrometrischen Messvorrichtung (1) gebildet wird, wobei die Vorrichtung Folgendes umfasst:

    - einen Detektor (10), der dazu ausgelegt ist, Partikel zu detektieren und bei jeder Detektion einen Impuls zu bilden, dessen Amplitude von einer Energie eines Partikels abhängt, der in dem Detektor interagiert hat;
    - eine spektrometrische Messschaltung (12, 13), die dazu ausgelegt ist, ein Spektrum zu bilden, wobei das Spektrum einer Anzahl von Partikeln entspricht, die in Kanälen detektiert werden, wobei jedem Kanal ein Rang zugewiesen ist, wobei jedem Rang eine Impulsamplitude entspricht;
    wobei das Verfahren die folgenden Schritte umfasst:

    - a) Anordnen der Vorrichtung gegenüber einem Kalibrierungsobjekt (2), wobei das Kalibrierobjekt Partikel mit verschiedenen bekannten Emissionsenergien (E'j) zu dem Detektor hin emittiert;
    - b) Detektieren eines Teils der Partikel durch den Detektor und Bilden eines Kalibrierungsspektrums (y) der detektierten Partikel, wobei das Spektrum verschiedene Peaks umfasst, wobei jeder Peak einer bekannten Energie entspricht;
    - c) Zuweisen eines Kanalrangs ($k_i$) zu jedem detektierten Peak;
    - d) ausgehend von den Rängen der Kanäle, die beim Schritt c) verschiedenen Peaks zugewiesen sind, und von den Emissionsenergien ($E'_j$), Bestimmen einer Kalibrierungsfunktion, wobei die Kalibrierungsfunktion eine Energie ausgehend von dem Rang jedes Kanals bestimmt, wobei die Kalibrierungsfunktion eine bijektive Funktion ist;

    wobei das Verfahren **dadurch gekennzeichnet ist, dass** der Schritt d) die folgenden Teilschritte umfasst:

    - d-i) Berücksichtigen eines analytischen Modells der Kalibrierungsfunktion ($f_e$), wobei das analytische Modell durch einen Satz von Parametern ($\beta$) parametriert wird;
    - d-ii) für verschiedene Werte jedes Parameters:

        • Anwenden der Kalibrierungsfunktion auf den Rang jedes Kanals, der jedem detektierten Peak zugewiesen ist, so dass für jeden Rang eine von der Kalibrierungsfunktion bestimmte Energie erhalten wird;
        • oder Anwenden der reziproken Funktion der Kalibrierungsfunktion auf jede Emissionsenergie, so dass für jede Emissionsenergie ein von der reziproken Funktion bestimmter Kanal erhalten wird;

    - d-iii) Bestimmen des Werts jedes Parameters, für den:

        • die bei d-ii) bestimmten Energien den Emissionsenergien des Kalibrierungsobjekts am nächsten kommen;

    die bei d-ii) bestimmten Kanäle den Kanälen, die jedem detektierten Peak zugewiesen sind, am nächsten kommen; wobei das Verfahren **dadurch gekennzeichnet ist, dass** der Teilschritt d-iii) umfasst:

    - Berechnen einer Wahrscheinlichkeitsfunktion für den Wert jedes Parameters $L(\beta|k, \sigma, E')$;
    - Schätzen des Werts jedes Parameters ($\beta$), der die Wahrscheinlichkeitsfunktion maximiert.

2.  Verfahren nach Anspruch 1, wobei

    - der Schritt c) eine Bestimmung einer Breite ($w_i$) jedes Peaks umfasst;
    - die Wahrscheinlichkeitsfunktion die Breite jedes Peaks berücksichtigt.

3.  Verfahren nach einem der Ansprüche 1 oder 2, wobei der Teilschritt d-iii) umfasst:

    - Berücksichtigen von verschiedenen Paaren (($E'_j$; ki)), wobei jedes Paar eine Emissionsenergie und einen einem Peak zugewiesenen Kanal umfasst, nach dem Schritt c);
    - Bestimmen des Werts jedes Parameters, für den die Kalibrierungsfunktion es ermöglicht, mehrere Paare zu verbinden, wobei jeder bestimmte Wert einen Anfangswert jedes Parameters bildet;
    - für jeden Anfangswert, Definieren eines Suchbereichs, der sich um den Anfangswert erstreckt, so dass der Wert jedes Parameters, der die Wahrscheinlichkeitsfunktion maximiert, in den Suchbereichen geschätzt wird, die um die Anfangswerte des Parameters herum definiert sind.

4. Verfahren nach einem der vorhergehenden Ansprüche, wobei der Teilschritt d-iii) von einem Optimierungsalgorithmus durchgeführt wird.

5. Verfahren nach einem der vorhergehenden Ansprüche, wobei der Schritt c) ein Auswählen der Peaks des Kalibrierungsspektrums in Abhängigkeit von einem Auswahlkriterium des Peaks umfasst.

6. Verfahren nach Anspruch 5, wobei das Auswahlkriterium eine Anzahl von Photonen ist, die in jedem Peak detektiert werden, oder ein Signal-Rausch-Verhältnis, das für jeden Peak bestimmt wird.

7. Verfahren nach einem der vorhergehenden Ansprüche, wobei der Teilschritt d-iii) ein Berücksichtigen eines Apriori auf den Wert mindestens eines Parameters umfasst, um den Wert des Parameters zu bestimmen.

8. Verfahren nach einem der vorhergehenden Ansprüche, wobei die Partikel ausgewählt sind aus: Photonen, Neutronen, geladenen Partikeln.

9. Vorrichtung (1), die dazu bestimmt ist, ein Spektrum von Partikeln zu erfassen, die von einem Objekt emittiert werden, wobei die Vorrichtung Folgendes umfasst:

   - einen Detektor (10), der dazu ausgelegt ist, Partikel zu detektieren, und bei jeder Detektion einen Impuls zu erzeugen, dessen Amplitude von einer Energie abhängt, die dem Partikel freigesetzt wird, der in dem Detektor interagiert hat;
   - eine spektrometrische Messschaltung (12), die dazu ausgelegt ist, ein Spektrum zu bilden, wobei das Spektrum einer Verteilung der Amplituden der von dem Detektor detektierten Impulse entspricht;
   - wobei die Vorrichtung **dadurch gekennzeichnet ist, dass** sie umfasst

   eine Verarbeitungseinheit (14), die dazu programmiert ist, den Schritt d) eines Verfahrens nach einem der vorhergehenden Ansprüche ausgehend von dem Spektrum durchzuführen.

10. Medium, das dazu bestimmt ist, an einen Computer angeschlossen zu werden, und Anweisungen zur Durchführung des Schritts d) eines Verfahrens nach einem der Ansprüche 1 bis 8 ausgehend von einem für die Energie von detektierten Partikeln repräsentativen Spektrum umfasst.

**Claims**

1. A method for processing a calibration spectrum (y) formed by a spectrometric measurement device (1), the device comprising:

   - a detector (10), configured to detect particles, and to form, on each detection, a pulse whose amplitude depends on an energy of a particle having interacted in the detector;
   - a spectrometric measurement circuit (12, 13), configured to form a spectrum, the spectrum corresponding to a number of particles detected in channels, each channel being assigned a rank, a pulse amplitude corresponding to each rank;
   the method comprising the following steps:

   - a) arrangement of the device facing a calibration object (2), the calibration object emitting, to the detector, particles of different known emission energies ($E'_j$);
   - b) detection of a part of the particles by the detector and formation of a calibration spectrum (y) of the detected particles, the spectrum comprising different peaks, each peak corresponding to a known energy;
   - c) detection of the peaks of the calibration spectrum and assignment of a channel rank ($k_i$) to each detected peak;

   - d) from the ranks of the channels assigned to different peaks in the step c) and the emission energies ($E'_j$), determination of a calibration function, the calibration function determining an energy from the rank of each channel, the calibration function being a bijective function;

the method being **characterized in that** the step d) comprises the following substeps:

- d-i) the taking into account of an analytical model of the calibration function ($f_e$), the analytical model being parameterized by a set of parameters ($\beta$);
- d-ii) for different values of each parameter:

  • application of the calibration function to the rank of each channel assigned to each detected peak, so as to obtain, for each rank, an energy determined by the calibration function;
  • or application of the function that is the reciprocal of the calibration function to each emission energy, so as to obtain, for each emission energy, a channel determined by the reciprocal function;

- d-iii) determination of the value of each parameter for which:

  • the energies determined in d-ii) are the closest to the emission energies of the calibration object;
  • the channels determined in d-ii) are the closest to the channels assigned to each detected peak.

the method being **characterized in that** substep d-iii) comprises:

- calculation of a function of likelihood of the value of each parameter $L(\beta|\kappa, \sigma, \boldsymbol{E'})$;
- estimation of the value of each parameter ($\hat{\beta}$) maximizing the likelihood function.

**2.** The method as claimed in claim 1, wherein

- the step c) comprises a determination of a width ($w_i$) of each peak;
- the likelihood function takes into account the width of each peak.

**3.** The method as claimed in either one of claims 1 and 2, wherein the substep d-iii) comprises:

- the taking into account of different pairings (($E'_j;k_i$)), each pairing comprising an emission energy and a channel assigned to a peak, following the step c);
- determination of the value of each parameter for which the calibration function makes it possible to link several pairings, each determined value forming an initial value of each parameter;
- for each initial value, definition of a search area extending around said initial value, such that the value of each parameter maximizing the likelihood function is estimated in the search areas defined around initial values of said parameter.

**4.** The method as claimed in any one of the preceding claims, wherein the substep d-iii) is implemented by an optimization algorithm.

**5.** The method as claimed in any one of the preceding claims, wherein the step c) comprises a selection of the peaks of the calibration spectrum as a function of a criterion of selection of the peak.

**6.** The method as claimed in claim 5, wherein the selection criterion is a number of photons detected in each peak or a signal-to-noise ratio determined for each peak.

**7.** The method as claimed in any one of the preceding claims, wherein the substep d-iii) comprises a taking into account of an a priori regarding the value of at least one parameter to determine the value of said parameter.

**8.** The method as claimed in any one of the preceding claims, wherein the particles are chosen from among: photons, neutrons, or charged particles.

**9.** A device (1) intended to acquire a spectrum of particles emitted by an object, the device comprising:

- a detector (10), configured to detect particles, and to form, on each detection, a pulse whose amplitude depends on an energy released by the particle having interacted in the detector;
- a spectrometric measurement circuit (12), configured to form a spectrum (y), the spectrum corresponding to a distribution of the amplitudes of the pulses detected by the detector;
the device being **characterized in that** it comprises

- a processing unit (14), programmed to implement the step d) of a method as claimed in any one of the preceding claims from the spectrum.

10. A medium, intended to be connected to a computer, comprising instructions for the implementation of the step d) of a method as claimed in any one of claims 1 to 8 from a spectrum representative of the energy of particles detected.

**Fig. 1**

**Fig. 2A**

**Fig. 2B**

$$w$$

**Canal**

**Fig. 3**

$y_c$

$k_1 \dots k_i \dots k_I$

$g$

$L(\boldsymbol{\beta}|\boldsymbol{\kappa}, \boldsymbol{\sigma}_c, \boldsymbol{E})$
$\widehat{\boldsymbol{\beta}}$

**Fig. 4**

**Fig. 5**

**Fig. 6**

**Fig. 7A**

**Fig. 7B**

**Fig. 7C**

**Fig. 7D**

Fig. 7E

Fig. 7F

**Fig. 7G**

**Fig. 8A**

**Fig. 8B**

**Fig. 8C**

**Fig. 8D**

**Fig. 8E**

**Fig. 8F**

**RÉFÉRENCES CITÉES DANS LA DESCRIPTION**

**Documents brevets cités dans la description**

- US 2020379133 A1